Europäisches Patentamt

European Patent Office

Office européen des brevets

(19)

(11) Veröffentlichungsnummer: **0 081 083**
**B1**

(12) **EUROPÄISCHE PATENTSCHRIFT**

(45) Veröffentlichungstag der Patentschrift: **23.03.88**

(51) Int. Cl.⁴: **C 08 F 291/00**, C 08 F 265/06, C 08 F 2/22

(21) Anmeldenummer: **82110108.6**

(22) Anmeldetag: **03.11.82**

(54) Verfahren zur Herstellung von wässrigen, hochkonzentrierten bimodalen Kunststoffdispersionen.

(30) Priorität: **27.11.81 DE 3147008**

(43) Veröffentlichungstag der Anmeldung:
**15.06.83 Patentblatt 83/24**

(45) Bekanntmachung des Hinweises auf die Patenterteilung:
**23.03.88 Patentblatt 88/12**

(84) Benannte Vertragsstaaten:
**DE FR GB IT NL**

(56) Entgegenhaltungen:
**EP-A-0 025 561**
**FR-A-2 286 152**
**GB-A- 928 556**
**US-A-4 254 004**

(73) Patentinhaber: **Röhm GmbH**
**Kirschenallee Postfach 4242**
**D-6100 Darmstadt 1 (DE)**

(72) Erfinder: **Siol, Werner, Dr. Dipl.-Chem.**
**Mühlbergstrasse 4**
**D-6102 Pfungstadt (DE)**
Erfinder: **Fink, Herbert, Dr. Dipl.-Chem.**
**Berliner Strasse 24**
**D-6101 Bickenbach (DE)**
Erfinder: **Klesse, Wolfgang, Dr. Dipl.-Chem.**
**Tucholsky-Weg 31**
**D-6500 Mainz 31 (DE)**
Erfinder: **Rauch, Hubert**
**Odenwaldstrasse 6**
**D-6108 Weiterstadt 1 (DE)**
Erfinder: **Sütterlin, Norbert, Dr. Dipl.-Chem.**
**Am Horeth 23**
**D-6105 Ober-Ramstadt (DE)**

Courier Press, Leamington Spa, England.

# 0 081 083

**Beschreibung**

Technisches Gebiet

Hochkonzentrierte Kunststoffdispersionen finden überall da verstärktes Interesse, wo ein Kunststoff als Bindemittel, Klebmittel, Überzugsmittel und dergl. in einer nicht brennbaren flüssigen Zubereitung eingesetzt werden soll und der Trocknungsaufwand möglichst gering gehalten werden soll. Bei den herkömmlichen, 50 bis 60-prozentigen wäßrigen Kunststoffdispersionen müssen je 100 Teile Kunststoff 100 bis 66 Teile Wasser verdampft werden. Dispersionen mit noch geringerem Wassergehalt sind herstellbar, sind aber infolge der Neigung der Dispersionspartikel, kristallartige Ordnungszustände zu bilden, hochviskos und dilatant. Bimodale Dispersionen haben diesen Nachteil nicht. Man versteht darunter Dispersionen, deren Partikel unterschiedlich große Teilchen mit wenigstens zwei deutlich getrennten Maxima in der Teilchengrößenverteilungskurve aufweisen. Sie haben bei gleichem Feststoffgehalt eine geringere Viskosität und sinc nicht strukturviskos.

Stand der Technik

Nach DE—A—29 31 127 lassen sich bimodale Dispersionen durch Mischen von Dispersionen mit unterschiedlicher mittlerer Teilchengröße herstellen. Man muß dazu zunächst die hochkonzentrierten Dispersionen für sich herstellen, was wegen der oben beschriebenen Viskositätsprobleme schwierig ist.

Ein anderes Verfahrensprinzip besteht darin, bei einem zweistufigen Emulsionspolymerisationsverfahren in der zweiten Stufe eine solche zusätzliche Emulgiermittelmenge zuzufügen, daß neue Teilchen gebildet werden, die im Wachstum hinter den ursprünglich gebildeten Teilchen zurückbleiben und ein zweites Maximum in der Verteilungskurve bilden. Dieses Prinzip wird bei den Verfahren der DE—A—28 37 992 und 29 31 127 sowie der US—A—4 254 004 angewendet. Es ist jedoch schwierig, bei diesen Verfahren reproduzierbare Ergebnisse zu erhalten, weil die Eigenschaften der Dispersion stark von der Anzahl der in der zweiten Stufe neugebildeten Teilchen abhängt. Diese Anzahl hängt auf schwer überschaubare Weise von einer Vielzahl von Faktoren ab.

Nach der FR—A—2 344 579 erhält man eine "Mikrosuspension" von PVC-Partikeln mit mehr als zwei Teilchengrößenmaxima, indem man eine vorgebildete Mikrosuspension mit zwei weiteren vorgebildeten "Mikrosuspensionen" oder Dispersionen, von denen wenigstens eine einen organisch löslichen Initiator in den Partikeln enthält, mischt und in Abwesenheit zusätzlicher Initiatoren weiteres Monomer zusetzt. Dabei wachsen die Partikel, die den Initiator enthalten, weiter an, bis der gewünschte hohe Feststoffgehalt erreicht ist, während die initiatorfreien Partikel ihre Größe beibehalten. Die Herstellung von initiatorhaltigen "Mikrosuspensionen" unterscheidet sich von der herkömmlichen Emulsionspolymerisation und den daraus hervorgehenden Produkten, so daß sie als Austauschprodukt für wäßrige Kunststoffdispersionen nur in Ausnahmefällen verwendbar sind.

Beschreibungsnachtrag, einzufügen auf Seite 3, Zeile 9 als selbständiger Abstaz:

Aus der EP—A 25 561 ist bereits ein Verfahren zur Herstellung einer wäßrigen, konzentrierten bimodalen Kunststoffdispersion durch Emulsionspolymerisation von Vinylchlorid oder dessen Mischung mit bis zu 30% anderen Monomeren in einer wäßrigen Phase, die wenigstens ein Emulgiermittel und wenigstens einen radikalbildenden wasserlöslichen Initiator enthält, bekannt. Dabei setzt man einem ersten Latex, enthaltend dispergierte PVC-Latexteilchen und eine wäßrige Phase, einen zweiten Latex, enthaltend einen zweiten dispergierten Kunststoff und eine wäßrige Phase, sowie eine aus Vinylchlorid bestehende oder Vinylchlorid enthaltende Monomerenphase zu und läßt die Monomeren polymerisieren. Die mittleren Teilchengrößen der Kunststoffpartikel der beiden dispergierten Kunststoffe unterscheiden sich um einen zwischen 2 und 15 liegenden Faktor. Das Verfahren gestattet die Herstellung von bimodalen PVC-Kunststoffdispersionen mit Feststoffgehalten von 45 bis 50%.

Aufgabe, Lösung und Vorteile

Der Erfindung liegt die Aufgabe zugrunde, wäßrige bimodale Kunststoffdispersionen mit gleichbleibenden Eigenschaften auf reproduzierbare Weise durch ein Verfahren zu erzeugen, das die Herstellung hochkonzentrierter Kunststoffdispersionen mit einem Feststoffgehalt von z.B. 60 bis 70 Gew.-% zuläßt. Eine Lösung dieser Aufgabe wurde in dem Verfahren gemäß Anspruch 1 gefunden. Es geht von einem Gemisch zweier Dispersionen von unterschiedlicher mittlerer Teilchengröße aus, deren Feststoffgehalt in dem Bereich liegen kann, in dem die besonderen Probleme hochkonzentrierter monodisperser Latizes noch nicht auftreten, z.B. unter 55 Gew.-%. Das Verhältnis der mittleren Teilchengrößen sowie die Anteile der verschiedenen Latexpartikel läßt sich durch die Abmischung vorgefertigter Dispersionen genauestens und reproduzierbar einstellen, so daß beim weiteren Wachstum während der Polymerisation Dispersionen mit genau vorausbestimmbaren Eigenschaften entstehen. Dadurch wird es möglich, Dispersionen mit Kunststoffgehalten zwischen 60 und 70 Gew.-% oder sogar noch darüber mit verhältnismäßig niedriger Viskosität und hervorragenden anwendungstechnischen Eigenschaften herzustellen.

Art der Kunststoffe

Die erfindungsgemäß hergestellten Dispersionen enthalten die Kunststoffe A und B aus den vorgefertigten Latizes und den durch Polymerisation gebildeten Kunststoff C. Diese Kunststoffe können

2

gleich oder verschieden sein, je nachdem man gleichförmig oder schalenförmig aufgebaute Latexpartikel oder Latexpartikel mit verschiedenartigen Eigenschaften im Endprodukt wünscht. Die vorgefertigten Latexkunststoffe A und B können wiederum schalenförmig aufgebaut sein. Ebenso können die Monomeren C aus mehreren, nacheinander einzusetzenden Monomeren oder Monomerengemischen bestehen. Vorzugsweise liegt wenigstens dem Kunststoff A und den Monomeren C das gleiche Monomere oder Monomerengemisch zugrunde. Das Verfahren der Erfindung ist nicht auf eine bestimmte Zusammensetzung der Komponenten A, B und C beschränkt, sofern nur die allgemein für wäßrige Kunststoffdispersionen geltenden Voraussetzungen erfüllt sind, daß die Kunststoffe A und B und der durch Polymerisation von C entstehende Kunststoff wenigstens unter den Herstellungs- bzw. Anwendungsbedingungen wasserunlöslich sind. Das ist der Fall, wenn wenigstens ein hinreichend großer Teil der den Kunststoffen zugrundeliegenden Monomeren nicht oder höchstens begrenzt wasserlöslich ist.

Zu den Monomeren, die den Komponenten A, B und C zugrundeliegen können, gehören beispielsweise die Alkylester der Acryl- und Methacrylsäure mit 1 bis 14 C-Atomen im Alkylrest, Styrol und seine Homologen, Vinylester niederer Carbonsäuren, Diene und niedere α-Olefine. Acryl- und/oder Methacrylsäurealkylester oder deren bemisch mit Styrol bilden im allgemeinen die Hauptmonomeren, die 70 Gew.% oder mehr der Kunststoffe aufbauen. Als modifizierende Monomere, die in der Regel weniger als 30% des Kunststoffes bilden, seien Acryl- und Methacrylnitril, Acryl- und Methacrylamid, deren N-Methylolverbindungen und N-Methyloläther, Hydroxyalkylester der Acryl- und Methacrylsäure, gegebenenfalls quaternierte Aminoalkylester und Aminoalkylamide der Acryl- und Methacrylsäure, ungesättigte Carbonsäuren, wie Acryl- und Methacrylsäure, Malein-, Fumar- und Itakonsäure und die Halbester der zweibasischen Carbonsäuren, sowie Maleinsäureanhydride genannt. Vorzugsweise enthalten sie eine kleine Menge einer α,ß-ungesättigten Carbonsäure.

## Die wäßrige Phase

macht in der fertigen Dispersion höchstens 70 Gew.-Teile je 100 Gew.-Teile des dispergierten Feststoffes aus, was einen Kunststoffgehalt über 58 Gew.% entspricht, und vorzugsweise nicht mehr als 65 Gew.-Teile. Besonders bevorzugt ist die Herstellung hochkonzentrierter Dispersionen mit 40 bis 60 Gew.-Teilen Wasserphase je 100 Gew.-Teile Kunststoff, was einem Kunststoffgehalt von etwa 62 bis 70 Gew.-% entspricht. Eine weitere Verminderung des Anteils der Wasserphase ist in vielen Fällen bei sorgfältiger Arbeitsweise möglich. Es darf jedoch nicht übersehen werden, daß man sich mit abnehmendem Wassergehalt einem theoretischen Grenzwert nähert, der für streng monodisperse Dispersionen bei 26 Vol-% und bei bimodalen Dispersionen noch etwas darunter liegt. An diesem Grenzwert berühren die Kunststoffpartikel einander, so daß kein frei fließfähiges System mehr vorliegt. Die Erfindung gestattet es, diesem Grenzwert nahezukommen, wenn auch die Empfindlichkeit gegen koagulierende Einflüsse dann immer mehr zunimmt.

Die wäßrige Phase beim Verfahren der Erfindung setzt sich zusammen aus der wäßrigen Phase des ersten Latex, der vorgelegt wird, und der wäßrigen Phase des zweiten Latex, der zugesetzt wird. Die Monomeren C werden im allgemeinen wasserfrei eingesetzt, jedoch kann gegebenenfalls darin eine kleine Menge Wasser, das beispielsweise als Lösungsvermittler für Initiatoren oder insbesondere Emulgatoren dient, gelöst oder gegebenenfalls emulgiert sein. Diese Wassermenge vergrößert natürlich die am Schluß des Verfahrens vorliegende Wasserphase und setzt den Kunststoffgehalt herab. Um einen hohen Kunststoffgehalt im Endprodukt zu erreichen, soll die zulaufende Monomerenphase wenigstens 90 Gew.-% der Monomeren C enthalten.

Der erste und der zweite Latex, enthaltend die Kunststoffe A und B können bereits in zeimlich konzentrierter Form, z.B. als 50- bis 65 Gew.-prozentige Dispersionen eingesetzt werden. Eine bei diesen Feststoffgehalten gegebenenfalls auftretende Strukturviskosität verschwindet im allgemeinen sofort, wenn die Latizes mit unterschiedlicher Teilchengröße vermischt werden. Der Kunststoffgehalt der beiden Latizes soll nicht unter 5 Gew.-% liegen und beträgt vorzugsweise 20 bis 65 Gew.-%.

## Einsatz der Kunststoffe A und B

Die Latizes, die die Kunststoffe A und B enthalten, können vor Beginn des Zulaufs der Monomeren C gemischt werden. Man kann auch den zweiten Latex ganz oder teilweise während des Zulaufs der Monomeren C zugeben. In diesem Falle wird bevorzugt der Latex mit der geringeren Partikelgröße als zweiter Latex verwendet.

Bei einer bevorzugten Ausführungsform wird die Herstellung des ersten Latex mit dem Verfahren der Erfindung zu einem mehrstufigen Verfahren zusammengefaßt. Man stellt zunächst in an sich bekannter Weise den ersten Latex her, wobei die gleichen oder andere Monomeren wie in C eingesetzt werden könne. Zu dem entstehenden Latex wird der zweite Latex, enthaltend den Kunststoff B, zugegeben und das Monomere C augesetzt. Im einfachsten Fall läßt man die Monomeren zu einer vorgelegten Wasserphase unter Polymerisationsbedingungen zulaufen, setzt nach einem vorbestimmten Umsatz den vorgefertigten zweiten Latex zu und fährt mit der Monomerenzugabe fort. Im allgemeinen wird es vorgezogen, den Monomerzulauf während der Zugabe des zweiten Latex zu unterbrechen. Die Gewichtsanteile der Kunststoffe A und B können so verteilt sein, daß sich die Menge des Kunststoffs mit den größeren Teilchen zur Menge des Kunststoffs mit den kleineren Teilchen wie 1:1 bis 100:1, vorzugsweise 4:1 bis 25:1, verhält. Die Gewichtssumme von A und B macht mindestens 5 und höchstens 80 Gew.-% des Kunststoffanteils im

3

Endprodukt aus, der sich—vollständiger Umsatz vorausgesetzt—aus der Gewichtssumme von A, B und C ergibt.

Die Teilchengröße der Kunststoffe A und B unterscheidet sich um einen Faktor zwischen 2 und 15. Die kleineren Teilchen können eine mittlere Teilchengröße im Bereich von 0,05 bis 0,5 µm haben, während der mittlere Teilchendurchmesser der größeren Teilchen im Bereich von 0,2 bis 4 µm liegt. Als mittlere Teilchengröße wird der Gewichtsmittelwert des Teilchendurchmessers angesehen, der sich z.B. nach der Methode von H. Lange, Kolloid-Zeitschrift, Zeitschrift für Polymere *223*, 24 (1968) ermitteln läßt. Eine moderne Meßmethode beruht auf der Messung der Streulichtschwankungen, die sich infolge der Brown'schen Bewegung der Latexpartikel in einem Laserstrahl ergeben. Während der Polymerisation der Monomeren C wachsen die Teilchen A und B weiter, wobei die Wachstumsgeschwindigkeit im allgemeinen von der Größe der Oberfläche abhängt. Daher ist das Wachstum der Teilchen verschiedener Größe nicht gleich. Im Endprodukt bilden die Teilchen mit dem größeren Durchmesser die überwiegende Masse des dispergierten Kunststoffes, vorzugsweise 60 bis 95 Gew.-%, während die kleinen Teilchen zahlenmäßig überwiegen.

### Die Emulgiermittel

Während des Zulaufs der Monomeren C und der Emulsionspolymerisation muß die wäßrige Phase ein Emulgiermittel oder gegebenenfalls ein Gemisch aus mehreren Emulgiermitteln enthalten. Diese können allein aus den eingesetzten Latizes stammen. Man kann jedoch zusätzliche Emulgiermittel vor, während oder nach der Polymerisation der Monomeren C zufügen. Man kann z.B. ein Emulgiermittel in den Monomeren C lösen oder eine wäßrige Emulgiermittellösung darin dispergieren. Im allgemeinen sollen während der Emulsionspolymerisation keine neuen Teilchen gebildet werden. Das tritt auch nicht ein, wenn die gegebenenfalls zugeführte Emulgiermittelmenge so bemessen und dosiert wird, daß kein freies, d.h. nicht an die Teilchenoberfläche adsorbiertes Emulgiermittel auftritt.

Die eingesetzten Latizes können die für Kunststoffdispersionen üblichen anionischen, kationischen oder nichtionischen niedermolekularen Emulgiermittel mit Tensidcharakter oder verträgliche Mischungen davon in den gebräuchlichen Mengen enthalten. Es ist selbstverständlich, daß die Emulgatorsysteme des ersten und des zweiten Latex miteinander verträglich sein müssen, was im Zweifelsfalle vorher zu prüfen ist. Im allgemeinen sind anionische Emulgatoren untereinander und mit nicht-ionischen Emulgatoren verträglich. Das gleich gilt auch für kationische Emulgatoren, während anionische und kationische Emulgatoren meistens miteinander unverträglich sind. Auch bei der Zugabe zusätzlicher Emulgiermittel ist die Verträglichkeit zu beachten. Im Endprodukt liegt die Konzentration an ionischen Emulgiermitteln vorzugsweise im Bereich von 0,01 bis 2 Gew.-%, bezogen auf die Wasserphase. Wenn nichtionogene Emulgatoren aus Stabilitätsgründen im Endprodukt erwünscht und in den eingesetzten Latizes nicht enthalten sind, werden sie zweckmäßig gleichzeitig mit dem zweiten Latex zugegeben. Ebenso kann man Basen oder sonstige Zusätze, die gewöhnlich erst nach Abschluß der Polymerisation zugesetzt werden, zur gleichen Zeit zugeben. Man spart dadurch die bei nachträglicher Zugabe erforderliche Rührzeit.

### Initiatoren und Polymerisationsverfahren

Die Emulsionspolymerisation wird durch die üblichen wasserlöslichen radikalbildenden Initiatoren, wie Kalium- oder Ammoniumperoxodisulfat oder bekannte Redoxsysteme, ausgelöst. Für die Mengenbemessung und die Temperatur gelten die aus der Emulsionspolymerisation bekannten Regeln. Die Monomeren C werden allmählich nach Maßgabe des Umsatzes unter Polymerisationsbedingungen so zugesetzt, daß sich keine großen Mengen an nicht umgesetzten Monomeren ansammeln. Eine gleichmäßige Zugabe der Monomeren im Laufe von 0,5 bis 5 Stunden unter Rühren ist im allgemeinen zweckmäßig. Die freiwerdende Polymerisationswärme kann über die Kesselwand durch Kühlung abgeführt werden, jedoch ist, namentlich wenn der Anteil von C an der Summe von A, B und C niedrig ist, eine mehr oder weniger adiabatische Arbeitsweise möglich. Häufig ist es vorteilhafter, zunächst nur einen Teil der Monomeren C zuzugeben und weitere Teile der Monomeren C jeweils nach dem Abklingen der Polymerisation hinzuzufügen. Nach Abschluß der Polymerisation wird zorzugsweise noch einige Stunden unter Polymerisationsbedingungen nachgerührt. Daran können sich übliche Maßnahmen zur Restmonomerentfernung anschließen.

### Polymodale Dispersionen

Die zur Herstellung bimodaler Dispersionen mit zwei Maxima in der Teilchengrößenverteilungskurve aufgestellten Vorschriften gelten entsprechend für die Herstellung von Dispersionen mit drei oder mehr Maxima. Man kann zu ihrer Herstellung einen dritten oder weitere Latizes zusetzen oder als ersten und/oder zweiten Latex seinerseits eine bimodale Dispersion einsetzen. Jedes Maximum muß sich von dem nächsten durch einen Faktor zwischen 2 und 15 in der mittleren Teilchengröße unterscheiden.

In den nachfolgenden Beispielen 1—5 ist die Herstellung der Ausgangslatizes für das Verfahren der Erfindung beschrieben. Das Erfindungsgemäße Verfahren wird in den Beispielen 6—10 dargestellt.

Die in den Beispielen angegebenen Teilchendurchmesser sind Mittelwerte, die nach einer speziellen Laserlichtstreuungsmessung unter Berücksichtigung der Brown'schen Molekularbewegung ermittelt werden. Die Meßmethode ist in der Firmenschrift der Coulter Elektronics Ltd. (1979) über das Gerät

4

"Coulter Nano-Sizer" beschrieben. Sie ergibt für bimodale Dispersionen einen einzigen Mittelwert, der nicht repräsentativ für die tatsächlich vorliegenden Teilchen sein muß.

Beispiel 1

In einem Witt'schen Topf (6 l) mit Rückflußkühler, Rührwerk und Zulaufgefäß wird eine Lösung aus 6,3 g Ammoniumperoxodisulfat und 0,042 g eines Emulgators, bestehend aus einem Umsetzungsprodukt aus Tri-isobutylphenol und 7 Mol Äthylenoxid, das sulfatiert und in das Natriumsalz übergeführt ist, in 2100 g Wasser vorgelegt und auf 80°C erwärmt. In diese Lösung wird unter Rühren innerhalb 60 Min. eine zuvor aus 526 g Methylmethacrylat, 439 g Butylacrylat, 9,75 g Methacrylsäure, 2 g Wasser und 2,1 g des oben genannten Emulgators hergestellte Monomer-Emulgatormischung bei 80°C zugetropft. Anschließend erfolgt innerhalb 3 Std. die Zugabe einer Monomer-Emulgatormischung, bestehend aus 1579 g Methylmethacrylat, 1316 g Butylacrylat, 29,25 g Methacrylsäure und 18,9 g des oben genannten Emulgators sowie 20 g Wasser. Anschließend wird mit wäßrigem Ammoniak auf pH 8 eingestellt, der Ansatz 2 Std. bei 80°C gehalten, dann auf Raumtemperatur abgekühlt.

Beispiel 2

In einem Witt'schen Topf (2 l) mit Rückflußkühler, Rührwerk und Zulaufgefäß wird eine Lösung aus 0,6 g Ammoniumperoxodisulfat und 18 g eines Emulgators, bestehend aus einem Umsetzungsprodukt aus Tri-isobutylphenol und 7 Mol Äthylenoxid, das sulfatiert und in das Natriumsalz übergeführt ist, in 786 g Wasser vorgelegt und auf 80°C erwärmt. In diese Lösung wird unter Rühren innerhalb 4 Std. eine zuvor aus 432 g Methylmethacrylat, 360 g Butylacrylat, 8 g Methacrylsäure, 1,8 g des oben genannten Emulgators, 1,8 g des oben genannten Initiators und 450 g Wasser hergestellte Emulsion zudosiert.

Anschließend wird der Ansatz 2 Std. bei 80°C gehalten, dann auf 50°C abgekühlt. Hierauf wird mit wäßrigem Ammoniak auf pH 8 eingestellt und dem Ansatz 42 g eines nichtionischen Emulgators, bestehend aus einem Umsetzungsprodukt von 1 Mol Isononylphenol mit 50 Mol Äthylenoxid gelöst in 80 g Wasser, zugesetzt.

Beispiel 2a: Herstellung analog Beispiel 2 mit der Änderung, daß nach dem Abkühlen auf 50°C kein Ammoniak und kein nichtionischer Emulgator zugesetzt werden.

Beispiel 3

In einem Polymerisationsgefäß, ausgestattet wie in Beispiel 2 beschrieben, wird eine Lösung (Vorlage) aus

    0,4 g  Ammoniumperoxodisulfat
    0,042 g  eines Emulgators, bestehend aus einem Umsetzungsprodukt aus Triisobutylphenol und 7 Mol Äthylenoxid, das sulfatiert und in das Natriumsalz übergeführt ist,
    335 g  destilliertem Wasser vorgelegt und auf 80°C erwärmt.

Zu dieser Vorlage dosiert man unter Rühren innerhalb von 4 Stunden eine Emulsion (Zulauf) aus

    626 g  Butylacrylat
    526 g  Methylmethacrylat
    8 g  Methacrylsäure
    3 g  des oben genannten Emulgators
    1,3 g  Ammoniumperoxodisulfat und
    500 g  destilliertem Wasser

Anschließend wird der Ansatz noch 2 Stunden bei 80°C gerührt, danach auf Raumtemperatur abgekühlt und filtriert.

Beispiel 4

Man verfährt wie Beispiel 3, ändert jedoch die Einwaagen wie folgt:

    Vorlage:    0,6 g  Ammoniumperoxodisulfat
                1,2 g  eines Emulgators, bestehend aus einem Umsetzungsprodukt aus Triisobutylphenol und 7 Mol Äthylenoxid, das sulfatiert und in das Natriumsalz übergeführt ist, und
                482 g  destilliertem Wasser

    Zulauf:     Emulsion, hergestellt aus:
                432 g  Butylacrylat
                362 g  Methylmethacrylat
                5,6 g  Methacrylsäure
                1,8 g  Ammoniumperoxodisulfat
                0,12 g  des oben genannten Emulgators
                725 g  destilliertem Wasser

Die Polymerisationsbedingungen entsprechen Beispiel 3.

Beispiel 5

Man verfährt wie in Beispiel 3, verwendet jedoch folgende Komponenten:

Vorlage:
0,3 g Natriumsalz eines $C_{15}$-Paraffinsulfonats,
0,1 g Ammoniumperoxodisulfat
400 g destilliertes Wasser

Zulauf:
Emulsion, hergestellt aus:
640 g Methylmethacrylat
340 g Butylmethacrylat
20 g Methacrylsäure
5 g des oben genannten Emulgators
0,3 g Ammoniumperoxodisulfat
600 g destilliertes Wasser

Die Polymerisationsbedingungen entsprechen Beispiel 3.

TABELLE 1

Übersicht über die Ausgangs-Latizes nach den Beispielen 1 bis 5

| Beisp. Nr. | Copolymerisat-Zusammensetzung [Gew.-%] | | | | pH-Wert | Trockengehalt [Gew.-%] | mittl. Teilchendurchm. [nm] |
|---|---|---|---|---|---|---|---|
| | MMA | BA | MA | BMA | | | |
| 1 | 54 | 45 | 1 | | 8,1 | 65,2 | 606 |
| 2 | 54 | 45 | 1 | | 9,6 | 39,9 | 54 |
| 2a | | | | | 2,1 | 39,8 | 58 |
| 3 | 45,3 | 54 | 0,7 | | 1,9 | 57,9 | 838 |
| 4 | 45,3 | 54 | 0,7 | | 1,9 | 39,6 | 104 |
| 5 | 64 | | 2 | 34 | 2,7 | 50,5 | 260 |

MMA=Methylmethacrylat
BA=Butylacrylat
MA=Methylacrylsäure
BMA=n-Butylmethacrylat

Beispiel 6

500 g des in Beispiel 1 hergestellten Latex, 81,3 g des in Beispiel 2 hergestellten Latex und 32 g einer 35 %igen Lösung eines Umsetzungsproduktes von 1 Mol Isononylphenol mit 100 Mol Äthylenoxid, 0,45 g Ammoniumperoxidsulfat werden gemischt und auf 80°C erwärmt. Innerhalb von 3 Stunden wird eine Monomerenmischung aus 93,2 g Methylmethacrylat, 77,6 g n-Butylacrylat und 1,7 g Methacrylsäure zudosiert und danach noch 2 Stunden bei 80°C gehalten, anschließend auf Raumtemperatur abgekühlt und mit 25 %igem wäßrigen Ammoniak auf pH 9,5 eingestellt.

Beispiel 7

470 g des in Beispiel 3 hergestellten Latex und 44,6 g des in Beispiel 4 hergestellten Latex werden gemischt. Nach Zugabe von 1,8 g 25 %igem wäßrigen Ammoniak und 34,3 g einer 35 %igen Lösung eines Umsetzungsproduktes von 1 Mol Isononylphenol mit 100 Mol Äthylenoxid werden bei 80°C 0,49 g Ammoniumperoxodisulfat zugesetzt und innerhalb einer Stunde eine Mischung, bestehend aus 74,7 g Methylmethacrylat, 89,1 g n-Butylacrylat, 1,19 g Methacrylsäure, 0,6 g Wasser und 0,6 g eines Emulgators, bestehend aus einem Umsetzungsprodukt von Tri-isobutylphenol und 7 Mol Äthylenoxid, das sulfatiert und in das Natriumsalz übergeführt ist, zugetropft. Nach Zulaufende wird 2 Std. bei 80°C gerührt, anschließend auf Raumtemperatur abgekühlt.

Beispiel 8

In einem Witt'schen Topf (2 l) mit Rückflußkühler, Rührwerk und Zulaufgefäß wird eine Lösung aus 1,8 g Ammoniumperoxidsulfat und 0,012 g eines Emulgators, bestehend aus einem Umsetzungsprodukt aus Tri-isobutylphenol und 7 Mol Äthylenoxid, das sulfatiert und in das Natriumsalz übergeführt ist, in 550 g

# 0 081 083

Wasser vorgelegt und auf 80°C erwärmt. In diese Lösung wird unter Rühren innerhalb einer Stunde eine zuvor aus 189 g Methylmethacrylat, 158 g Butylacrylat, 3,5 g Methacrylsäure, 0,6 g Wasser und 0,6 g des oben genannten Emulgators hergestellte Monomer-Emulgatormischung bei 80°C zugetropft (Zulauf 1). Anschließend erfolgt die Zugabe einer Monomer-Emulgatormischung, bestehend aus 283,5 g Methylmethacrylat, 236,5 g n-Butylacrylat, 5,25 g Methacrylsäure, 3 g Wasser und 2,7 g des oben genannten Emulgators in 1 1/2 Std. (Zulauf 2). Der Teilchendurchmesser beträgt in diesem Stadium 560 nm. Nach Neutralisation der Dispersion mit $NH_3$-Lösung und Zugabe von 30 g eines Umsetzungsproduktes von 1 Mol Isononylphenol auf pH 7 mit 50 Mol Äthylenoxid (verdünnt mit 70 g Wasser) und 40 g eines feinteiligen, 40 %igen Latex, der in Beispiel 2 hergestellt worden ist, wird eine Mischung aus 283,5 g Methylmethacrylat, 236,5 g n-Butylacrylat, 5,25 g Methacrylsäure, 3 g Wasser und 2,7 g des oben genannten Emulgators in 1 1/2 Std. bei 80°C zudosiert. (Zulauf 3). Anschließend wird der Ansatz 2 Std. bei 80°C gehalten, dann auf Raumtemperatur abgekühlt.

Beispiel 9

In einem Witt'schen Topf mit Rückflußkühler, Rührer und Zulaufgefäß wird eine Vorlage aus
- 6,3 g Ammoniumperoxodisulfat und
- 0,042 g eines Emulgators, bestehend aus einem Umsetzungsprodukt aus Tri-isobutylphenol und 7 Mol Äthylenoxid, das sulfatiert und in das Natriumsalz übergeführt ist, in
- 1930 g destilliertem Wasser auf 80°C erwärmt. Innerhalb einer Stunde wird in diese Vorlage eine Monomer-Emulgatormischung zudosiert, bestehend aus:

| Zulauf 1: | | |
|---|---|---|
| | 527 g | Methylmethacrylat |
| | 439 g | n-Butylacrylat |
| | 10 g | Methacrylsäure |
| | 2 g | des oben genannten Emulgators |
| | 2 g | dest. Wasser |

Anschließend wird innerhalb von 90 Minuten als Zulauf 2 eine Monomer-Emulgatormischung mit höherem Emulgatorgehalt zugesetzt.

| Zulauf 2: | | |
|---|---|---|
| | 790 g | Methylmethacrylat |
| | 658 g | n-Butylacrylat |
| | 15 g | Methacrylsäure |
| | 10 g | des oben genannten Emulgators |
| | 10 g | dest. Wasser |

Nach Beendigung des Zulaufs 2 werden 600 g des gemäß Beispiel 2a hergestellten Latex zudosiert. Anschließend erfolgt die Zugabe des Zulaufs 3, der mit Zulauf 2 übereinstimmt. Im Anschluß an die Zugabe des Zulaufs 3 werden 11 g Ammoniaklösung (25 %ig) zugegeben.

Beispiel 10

Das Verfahren gemäß Beispiel 9 wird mit folgender Abänderung wiederholt:

| Vorlage: | | |
|---|---|---|
| | 2,1 g | Initiator |
| | 0,007 g | Emulgator |
| | 654 g | dest. Wasser |

| Zulauf 1 (in 30 Min.): | | |
|---|---|---|
| | 104 g | Methylmethacrylat |
| | 55 g | n-Butylacrylat |
| | 3,25 g | Methacrylsäure |
| | 0,07 g | Emulgator |
| | 0,07 g | Wasser |

| Zulauf 2 (in 2 1/2 Std.): | | |
|---|---|---|
| | 520 g | Methylmethacrylat |
| | 276,4 g | n-Butylacrylat |
| | 16,25 g | Methacrylsäure |
| | 3,75 g | Emulgator |
| | 3,75 g | Wasser |

Nach Zugabe von 200 g des in Beispiel 5 hergestellten Latex wird folgende Monomer-Emulgatormischung innerhalb einer Stunde zudosiert:

| Zulauf 3 | | |
|---|---|---|
| | 208 g | Methylmethacrylat |
| | 110,6 g | n-Butylacrylat |
| | 6,5 g | Methacrylsäure |
| | 1,5 g | Emulgator |
| | 1,5 g | Wasser |

7

## TABELLE 2

Übersicht über die Eigenschaften der erfindungsgemäß hergestellten Dispersionen der Beispiele 6—10

| Beisp. Nr. | nach Beisp. Nr. | Latex I Menge (g) | DM* (nm) | nach Beisp. Nr. | Latex II Menge (g) | DM* (nm) | Mengenver- hältnis Latex I:II (Feststoff) | Trockengeh. (Gew.-%) | DM* (nm) | Viskosität** mPa s | Sp./U | pH- Wert |
|---|---|---|---|---|---|---|---|---|---|---|---|---|
| 6 | 1 | 500 | 606 | 2 | 81,3 | 54 | 10:1 | 69,5 | 760 | 9 400 | III/6 | 9,5 |
| 7 | 3 | 470 | 838 | 4 | 44,6 | 104 | 15:1 | 65,6 | 732 | 1 800 | II/6 | 5,5 |
| 8 | — | — | 560 | 2 | 40 | 54 | 55:1 | 69,4 | 864 | 12 600 | III/6 | 6,8 |
| 9 | — | — | — | 2a | 600 | 58 | 10:1 | 64,3 | 568 | 112 | I/30 | 8,7 |
| 10 | — | — | — | 5 | 200 | 260 | 10:1 | 65,0 | 614 | 118 | I/30 | 1,9 |

*DM=mittlerer Teilchendurchmesser, bestimmt mittels Coulter Nanosizer
**bestimmt mittels Brookfield-Viskosimeter. Hinter dem Viskositätswert sind die Spindel-Nummer (römische Zahl) und Umdrehungsgeschwindigkeit in Umdrehungen pro Minute angegeben.

# 0 081 083

## Patentansprüche

1. Verfahren zur Herstellung einer wäßrigen, hochkonzentrierten bimodalen Kunststoffdispersion durch Emulsionspolymerisation von äthylenisch ungesättigten, wenigstens zum Teil begrenzt wasserlöslichen Monomeren in einer wäßrigen Phase, die wenigstens ein Emulgiermittel und wenigstens einen radikalbildenden wasserlöslichen Initiator enthält, bei dem man einem ersten Latex, enthaltend einen dispergierten Kunststoff A und eine wäßrige Phase, einen zweiten Latex, enthaltend einen dispergierten Kunststoff B und eine wäßrige Phase, wobei sich die mittleren Teilchengrößen der Kunststoffpartikel von A und B um einen Faktor zwischen 2 und 15 unterscheiden, sowie eine Monomerenphase, enthaltend Monomere C, zusetzt und die Monomeren C polymerisieren läßt, dadurch gekennzeichnet, daß die Gewichtssumme von A und B und C 100 Gew.-Teile beträgt und zu 70% oder mehr aus Acryl- und/oder Methacrylsäurealkylestern oder deren Gemisch mit Styrol aufgebaut ist, daß die Gewichtssumme der wäßrigen Phasen höchstens 70 Gew.-Teile ausmacht und daß man die Monomerenphase allmählich nach Maßgabe des Umsatzes unter Polymerisationsbedingungen zusetzt und den zweiten Latex vor oder während der Zugabe der Monomerenphase zusetzt.

2. Verfahren nach Anspruch 1, dadurch gekennzeichnet, daß derjenige der Kunststoffe A und B, der in Form der größeren Latexpartikel eingesetzt wird, wenigstens 60% der Gewichtssumme von A und B ausmacht.

3. Verfahren nach den Ansprüchen 1 und 2, dadurch gekennzeichnet, daß die Monomerenphase neben den Monomeren C ein wasserlösliches Emulgiermittel und gegebenenfalls geringe Menge Wasser enthält.

4. Verfahren nach den Ansprüchen 1 bis 3, dadurch gekennzeichnet, daß die Gewichtssumme der wäßrigen Phase höchstens 60 und vorzugsweise höchstens 50 Gew.-Teile ausmacht, bezogen auf 100 Teile A+B+C.

5. Verfahren nach den Ansprüchen 1 bis 4, dadurch gekennzeichnet, daß man die Monomeren C in Form einer wenigstens 90 Gew.-prozentigen Monomerenphase allmählich unter Polymerisationsbedingungen zulaufen läßt.

6. Verfahren nach den Ansprüchen 1 bis 4, dadurch gekennzeichnet, daß man die Monomeren C in einem oder mehreren Teilen zu dem Gemisch der Latizes der Kunststoffe A und B zusetzt und polymerisieren läßt.

## Revendications

1. Procédé de préparation d'une dispersion aqueuse ultra-concentrée bimodale de matières synthétiques; par polymérisation en émulsion de monomères à insaturation éthylénique, au moins une part de ces monoméres, ayant une solubilité limitée dans l'eau, dans une phase aqueuse qui contient au moins un émulsifiant et au moins un initiateur radicalaire soluble dans l'eau, où l'on ajoute un premier latex contenant une matière synthétique A dispersée et une phase aqueuse, un deuxième latex contenant une matière synthétique B dispersée et une phase aqueuse, la dimension moyenne des particules des matières synthétiques A et B se différenciant d'un facteur compris entre 2 et 15, ainsi qu'une phase monomère contenant les monomères C, puis on laisse polymériser les monomères C, caractérisé en ce que la somme des poids de A et B et C se monte à 100 parties en poids et qu'elle est constituée à 70% ou plus par des esters alkyliques de l'acide acrylique et/ou de l'acide méthacrylique ou leurs mélanges avec du styrène, que la somme des poids des phases aqueuses se monte au plus à 70 parties en poids que la phase monomère est ajoutée progressivement en fonction de la réaction dans les conditions de polymérisation et que le deuxième latex est ajouté avant ou pendant l'addition de la phase monomère.

2. Procédé selon la revendication 1, caractérisé en ce que celle des matières synthétiques A et B qui est mise en oeuvre sous forme de plus grosses particules de latex, constitue au moins 60% de la somme des poids et A et B.

3. Procédé selon les revendications 1 et 2, caractérisé en ce que la phase monomère contient, outre les monomères C, un émulsifiant soluble dans l'eau et éventuellement une petite quantité d'eau.

4. Procédé selon les revendications 1 à 3, caractérisé en ce que la somme pondérale de la phase aqueuse se monte tout au plus à 60 et de préférence plutôt au plus à 50 parties en poids, calculée sur 100 parties de A+B+C.

5. Procédé selon les revendications 1 à 4, caractérisé en ce qu'on introduit les monomères C sous la forme d'une phase monomère à au moins 90% en poids, progressivement, dans les conditions de polymérisation.

6. Procédé selon les revendications 1 à 4, caractérisé en ce que l'on ajoute les monomères C en une ou plusieurs parties au mélange des latex des matières synthétiques A et B et qu'on laisse la polymérisation s'effectuer.

## Claims

1. Process for preparing an aqueous, highly concentrated bimodal plastics dispersion by emulsion polymerisation of ethylenically unsaturated monomers, at least part of which have a limited solubility in water in an aqueous phase containing at least one emulsifier and at least one radical-forming water-soluble

9

initiator, wherein there is added to a first latex containing a dispersed plastics A and an aqueous phase, a second latex containing a dispersed plastics B and an aqueous phase, the average particle sizes of the plastics particles of A and B differing by a factor of between 2 and 15, and a monomeric phase containing monomer C, and the monomers C are allowed to polymerise, characterised in that the total weight of A and B and C is 100-parts by weight and 70% or more thereof is made up of alkylacrylates and/or methacrylates or a mixture thereof with styrene, the total weight of the aqueous phases amounts to at most 70 parts by weight and the monomeric phase is added gradually, in accordance with the rate of conversion, under polymerisation conditions and the second latex is added before or during the addition of the monomeric phase.

2. Process as claimed in claim 1, characterised in that the particular plastics A or B which is used in the form of the larger latex particles makes up at least 60% of the total weight of A and B.

3. Process as claimed in claims 1 and 2, characterised in that the monomeric phase contains, in addition to the monomers C, a water-soluble emulsifier and optionally a small amount of water.

4. Process as claimed in claims 1 to 3, characterised in that the total weight of the aqueous phases makes up at most 60 and preferably at most 50 parts by weight, based on 100 parts of A+B+C.

5. Process as claimed in claims 1 to 4, characterised in that the monomers C are introduced gradually in the form of an at least 90% by weight monomeric phase under polymerisation conditions.

6. Process as claimed in claims 1 to 4, characterised in that the monomers C are added in one or more batches to the mixture of the latices of the plastics A and B and polymerised.